**Europäisches Patentamt**

**European Patent Office**

**Office européen des brevets**

(11) Veröffentlichungsnummer: **0 210 517**
**B1**

(12) **EUROPÄISCHE PATENTSCHRIFT**

(45) Veröffentlichungstag der Patentschrift:
**15.02.89**

(21) Anmeldenummer: **86109596.6**

(22) Anmeldetag: **14.07.86**

(51) Int. Cl.⁴: **A01C 7/20**, A01C 5/06

(54) Sämaschine.

(30) Priorität: **02.08.85 DE 3527760**

(43) Veröffentlichungstag der Anmeldung:
**04.02.87 Patentblatt 87/6**

(45) Bekanntmachung des Hinweises auf die Patenterteilung:
**15.02.89 Patentblatt 89/7**

(84) Benannte Vertragsstaaten:
**AT BE CH DE FR GB IT LI LU NL SE**

(56) Entgegenhaltungen:
**DE-C- 3 022 217**
**FR-A- 2 015 942**
**FR-A- 2 530 113**
**GB-A- 1 513 238**

(73) Patentinhaber: **Amazonen-Werke H. Dreyer GmbH & Co. KG, Am Amazonenwerk 9-13,**
**D-4507 Hasbergen-Gaste(DE)**

(72) Erfinder: **Steenken, Bernhard, Waldhöfe 17,**
**D-4475 Sögel 2(DE)**

(74) Vertreter: **Patentanwälte Grünecker, Kinkeldey, Stockmair & Partner, Maximilianstrasse 58,**
**D-8000 München 22(DE)**

ACTORUM AG

**Beschreibung**

Die Erfindung betrifft eine Sämaschine mit einem Rahmen und daran höhenbeweglich angeordneten Säscharen, die zusätzlich einzeln mit dem Rahmen über federnde sowie auf sie in Richtung auf den Boden wirksame Elemente verbunden sind, deren Spannung mit Hilfe einer zentralen Einstellvorrichtung veränderbar ist.

Eine derartige Sämaschine ist bereits durch die DE-C 3 022 217 bekannt. Bei dieser Sämaschine läßt sich der Schardruck durch eine zentrale Einstellvorrichtung direkt vom Schleppersitz aus über eine fernbedienbare Betätigungseinrichtung verstellen. Somit ist es möglich, den Schardruck für die Säschare den jeweilgen Bodenverhältnissen anzupassen.

Weiterhin ist es durch diesen Stand der Technik bekannt, hinter den Säscharen Zustreichelemente anzuordnen, denen in Richtung auf den Boden wirksame federnde Elemente zugeordnet sind, wobei die Spannung der federnden Elemente ebenfalls mit Hilfe einer zentralen Einstellvorrichtung veränderbar ist. Hierdurch ist es möglich, ebenfalls den Zustreicherdruck über eine fernbedienbare Betätigungseinrichtung direkt vom Schleppersitz aus zu verstellen.

Nachteilig ist jedoch bei dieser bekannten Sämaschine, daß relativ große Verstellkräfte aufgebracht werden müssen, um die Spannung der federnden Elemente mit Hilfe der zentralen Einstellvorrichtung verändern zu können.

Der Erfindung liegt die Aufgabe zugrunde, die Bedienung der zentralen Einstellvorrichtung zu erleichtern.

Diese Aufgabe wird erfindungsgemäß dadurch gelöst, daß in der zentralen Einstellvorrichtung zumindest ein den an den Säscharen angreifenden federnden Elementen entgegenwirkendes federndes Kompensationselement angeordnet ist. Hierdurch wird in überraschend einfacher Weise erreicht, daß die Einstellvorrichtung mit äußerst geringen Kräften verstellt werden kann. Durch das Kompensationselement wird eine Kraft aufgebracht, so daß die Verstellkraft praktisch gleich Null wird. In bevorzugter Weise ist dieses federnde Kompensationselement derart ausgelegt, daß dieses federnde Kompensationselement zumindest annähernd die Federkraft der an den Säscharen angreifenden federnden Elemente kompensiert.

Weiterhin ist erfindungsgemäß bei einer Sämaschine vorgesehen, bei der hinter den Säscharen Zustreichelemente angeordnet sind, denen federnde Elemente und eine zentrale Einstellvorrichtung zur Veränderung der Spannung dieser federnden Elemente zugeordnet sind, daß an dieser zentralen Einstellvorrichtung zumindest ein den an den Zustreichern angreifenden federnden Elementen entgegenwirkendes federndes Kompensationselement angeordnet ist. Somit läßt sich auch die Einstellvorrichtung für die Zustreicher mit einer äußerst geringen, praktisch gleich Null werdenden Einstellkraft betätigen.

Dieses erfindungsgemäße Kompensationselement ist vor allem für Sämaschinen mit zentralen Einstellvorrichtungen von Vorteil, insbesondere wenn elektrische Regelvorrichtung für die Verstellung vorgesehen sind, bzw. wenn die Einstellvorrichtung die von Hand verstellt werden muß. Somit lassen sich durch relativ klein dimensionierte Betätigungselemente die Einstellvorrichtung und somit die wirksame auf die Säschare bzw. die Zustreicher einwirkenden Kräfte, die relativ groß sind, verstellen.

Weitere Einzelheiten der Erfindung sind den übrigen Unteransprüchen, der Beispielsbeschreibung und den Zeichnungen zu entnehmen. Hierbei zeigen

Fig. 1 eine erfindungsgemäß ausgerüstete Sämaschine mit einer hydraulisch betätigten Einstellvorrichtung in der Seitenansicht und

Fig. 2 eine weitere erfindungsgemäß ausgebildete Sämaschine mit einer über ein mechanisches Element betätigten Einstellvorrichtung in Seitenansicht.

Die Sämaschine weist einen Rahmen 1 und einen Vorratsbehälter 2 mit der Dosiervorrichtung 3 auf. An der Vorderseite der Maschine sind die Kupplungselemente 4 für die Dreipunktkupplung eines die Sämaschine ziehenden Schleppers angeordnet. Im Betrieb stützt sich die Sämaschine über die Laufräder 5 auf dem Boden 6 ab. An dem Rahmen 1 sind über die Halterungen 7 die Säschare 8 in aufrechter Ebene bewegbar angeordnet, die über die Federn 9 in Richtung auf den Boden 6 belastet werden. Der Schardruck kann für jedes Säschar 8 mit Hilfe der Lochschiene 10 eingestellt werden, so kann beispielsweise der Schardruck für die in der Schlepperspur arbeitenden Säschare 2 unabhängig von den übrigen Säscharen erhöht werden. An der Vorderseite der Drillmaschine ist die hydraulische zentrale Einstellvorrichtung 11 angeordnet, die über einen Hydraulikschlauch mit der Schlepperhydraulik verbunden ist und vom Schlepper aus betätigt wird. Die hydraulische Einstellvorrichtung 11 weist einen Hydraulikzylinder 12 und eine sich über die Arbeitsbreite der Maschine erstreckende Schiene 13 mit dem am Rahmen 1 gelagerten Umlenkhebel 14 auf. Hinter der Sämaschine ist über die Streben 15 der Balken 16 angeordnet, an dem in aufrechter Ebene schwenkbare Zustreichelemente 17 gelagert sind, die durch die Zugfederung 18 in Richtung auf den Boden 6 belastet werden. Der Zustreicherdruck ist mit Hilfe der Lochschienen 19 für jedes Zustreichelement 17 individuell einstellbar. Weiterhin sind die Zugfedern 18 mit der sich über die Arbeitsbreite der Sämaschine erstreckenden Federhalteschiene 20 verbunden. An der Federhalteschiene 20 ist der Umlenkhebel 21 angeordnet. Die Stange 22 verbindet den Umlenkhebel 21 und somit die Federhaltschiene 20 mit der hydraulischen Einstellvorrichtung 11.

Weiterhin weist die zentrale Einstellvorrichtung 11 das als Zugfeder 23 ausgebildete federnde Kompensationselement auf, welches der Kraft der Feder 9 und 18 entgegenwirkt. Diese Zugfeder 23 ist derart dimensioniert, daß es zumindest annähernd die Federkraft der an den Säscharen 8 und an den Zustreichern 17 angreifenden Federn 9 und 8 kompensiert. Die Zugfeder 23 ist für beide Einstellvorrichtungen vorgesehen. Aufgrund der Anordnung der Zugfeder 23, welche als Kompensationselement wirkt, läßt sich der Schar- bzw. Zustreicherdruck über den Hydraulikzylinder 12 mit äußerst geringer Kraft verstellen. Der Hydraulikzylinder 12 kann sehr klein ausgelegt werden. Somit reichen also geringste Kräfte aus, um den Schar- bzw. den Zustreicherdruck zu verändern.

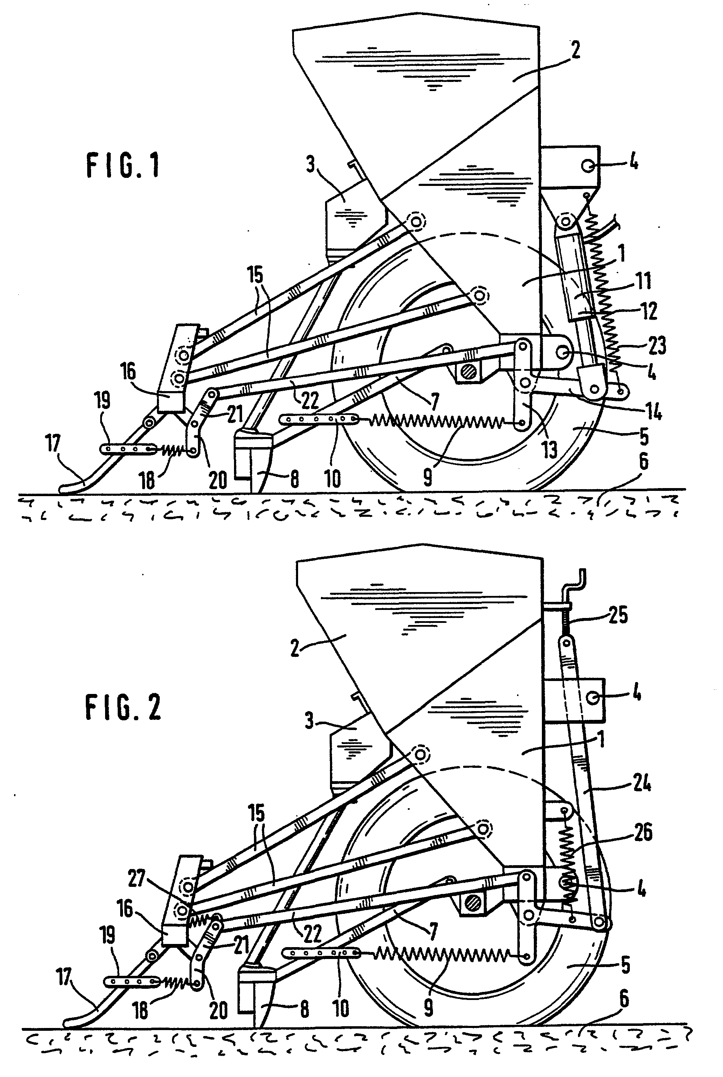

Die Drillmaschine gemäß Fig. 2 unterscheidet sich von der Sämaschine gemäß Fig. 1 im wesentlichen durch die andere Ausbildung der Einstellvorrichtung und der Anordnung der Kompensationselemente. Die zentrale Einstellvorrichtung 24 weist das als Spindel 25 ausgebildete mechanische Verstellelement auf. Die für den Schardruck und die für den Zustreicherdruck vorgesehene Einstellvorrichtung weist jeweils getrennte Kompensationselemente auf. Das als Zugfeder 26 ausgebildete Kompensationselement, welches zur Kompensation der von den an den Säscharen 8 angebrachten Feder 9 aufgebrachten Federkraft dient, ist auf der Vorderseite der Drillmaschine zwischen dem Umlenkhebel 14 und dem Rahmen 1 der Drillmaschine angeordnet. Das zur Kompensation der von den an den Zustreichern 17 angebrachten Federn 18 aufgebrachten Kraft als Feder 27 ausgebildete Kompensationselement ist zwischen dem Hebel 27 und dem Balken 16 angeordnet. Durch diese Feder 27 wird die Kraft der Federn 18, die an den Zustreichern angeordnet sind, kompensiert. Somit läßt sich auch diese Einstellvorrichtung mit sehr geringen Kräften, je nachdem wie stark die als Zugfedern 27 ausgebildeten Kompensationselemente ausgelegt sind, verstellen.

## Patentansprüche

1. Sämaschine mit einen Rahmen und daran höhenbeweglich angeordneten Säscharen, die zusätzlich einzeln mit dem Rahmen über federnde sowie auf sie in Richtung auf den Boden wirksame Elemente verbunden sind, deren Spannung mit Hilfe einer zentralen Einstellvorrichtung veränderbar ist, dadurch gekennzeichnet, daß an der zentralen Einstellvorrichtung (11, 24) zumindest ein den an den Säscharen (8) angreifenden federnden Elementen (9) entgegenwirkendes federndes Kompensationselement (23, 26) angeordnet ist.

2. Sämaschine nach Anspruch 1, dadurch gekennzeichnet, daß dieses federnde Kompensationselement (23, 26) zumindest annähernd die Federkraft der an den Säscharen (8) angreifenden federnden Elemente (9) kompensiert.

3. Sämaschine mit einem Rahmen und daran höhenbeweglich angeordneten Säscharen und hinter den Säscharen angeordneten Zustreichelementen, denen in Richtung auf den Boden wirksame federnde Elemente zugeordnet sind, wobei die Spannung der federnden Elemente mit Hilfe einer zentralen Einstellvorrichtung veränderbar ist, dadurch gekennzeichnet, daß an der zentralen Einstellvorrichtung (11, 24) zumindest ein den an den Zustreichern (17) angeordneten federnden Elementen (18) entgegenwirkendes federndes Kompensationselement (23, 27) angeordnet ist.

4. Sämaschine nach Anspruch 1 und 3, dadurch gekennzeichnet, daß die beiden Einstellvorrichtungen miteinander gekoppelt sind, und daß für die beiden Einstellvorrichtungen (11) ein gemeinsames Kompensationselement (23) vorgesehen ist.

5. Sämaschine nach Anspruch 1 und 3, dadurch gekennzeichnet, daß die beiden Einstellvorrichtungen (24) miteinander gekoppelt sind, und daß jeweils für jede Einstellvorrichtung (24) getrennt Kompensationselemente (26, 27) vorgesehen sind.

## Claims

1. Seed drill, including a frame and sowing coulters, which are disposed thereon in a vertically displaceable manner and are additionally connected individually to the frame by means of resilient members and by means of members which act upon the sowing coulters to bias such in the direction of the ground, the tension of said members being adjustable by means of a central adjusting arrangement, characterised in that at least one resilient compensating member (23, 26), which counteracts the resilient members (9) acting on the sowing coulters (8), is disposed on the central adjusting arrangement (11, 24).

2. Seed drill according to claim 1, characterised in that this resilient compensating member (23, 26) compensates, at least approximately, for the resilient force of the resilient members (9) which act upon the sowing coulters (8).

3. Seed drill, including a frame and sowing coulters, which are disposed thereon in a vertically displaceable manner, and sweeping members which are disposed behind the sowing coulters and have associated therewith resilient members which are effective to bias in the direction of the ground, the tension of the resilient members being adjustable by means of a central adjusting arrangement, characterised in that at least one resilient compensating member (23, 27), which counteracts the said resilient members (18) disposed on the sweeping means (17), is disposed on the central adjusting arragnement (11, 24).

4. Seed drill according to claims 1 and 3, characterised in that the two adjusting arrangements are interconnected, and a common compensating member (23) is provided for the two adjusting arrangements (11).

5. Seed drill according to claim 1 and 3, characterised in that the two adjusting arrangements (24) are interconnected, and compensating members (26, 27) are provided separately for each adjusting arrangement (24).

## Revendications

1. Semoir comportant un châssis muni de socs de semoir relevables et qui sont en outre reliés séparément au châssis par des éléments élastiques agissant sur ces socs en direction de sol et dont la tension peut être commandée par un dispositif central de réglage, semoir caractérisé en ce que le dispositif central de réglage (11, 24) comporte au moins un élément de compensation (23, 26), à ressorts qui agit contre les éléments à ressorts (9) reliés aux socs (8).

2. Semoir selon la revendication 1, caractérisé en ce que cet élément de compensation à ressorts (23, 26) compense au moins approximativement la force de ressort exercée par les éléments à ressorts (9) agissant sur les socs de semoir (8).

3. Semoir comportant un châssis portant des socs de semoir relevables et des raclettes derrière les socs, des éléments à ressorts étant reliés à ces raclettes pour les appliquer contre le sol, la tension des éléments à ressorts pouvant être changée par un dispositif central de réglage, semoir caractérisé en ce que le dispositif central de réglage (11, 24) comporte au moins un élément de compensation (23, 27) à ressorts agissant contre les éléments à ressorts (18) associés aux raclettes (17).

4. Semoir selon les revendications 1 et 3, caractérisé en ce que les deux dispositifs de réglage sont couplés l'un à l'autre et un seul élément de compensation (23) est prévu en commun pour les deux dispositifs de réglage (11).

5. Semoir selon les revendications 1 et 3, caractérisé en ce que les deux dispositifs de réglage (24) sont couplés l'un à l'autre et en ce qu'un élément de compensation (26, 27) distinct est prévu pour chaque dispositif de réglage (24).

EP 0 210 517 B1

FIG.1

FIG. 2